# FASCICULE DE BREVET EUROPEEN

(11) **EP 0 687 590 B1**
(45) Date de publication et mention de la délivrance du brevet: **19.03.1997**
(21) Numéro de dépôt: 95470023.3
(22) Date de dépôt: 14.06.1995
(51) Int. Cl.: B60N 2/48

(54) **Système de verrouillage d'un dispositif réglable en translation, tel qu-un appuie-tête**
Verriegelung eines verschiebbaren Gegenstandes wie z.B. einer Kopfstütze
Locking for translation-adjustable device like a headrest

(30) Priorité: 16.06.1994 FR 9407554
(43) Date de publication de la demande: 20.12.1995
(73) Titulaire: BERTRAND FAURE FRANCE, F-92100 Boulogne (FR)
(72) Inventeur: Hamelin, Bruno, Cabinet Ballot Schmit, F-57000 Metz (FR)
(74) Mandataire: Schmit, Christian Norbert Marie

(56) Documents cités:
- DE-A- 2 708 461
- DE-A- 2 948 537
- DE-A- 3 131 633
- FR-A- 2 686 383
- GB-A- 2 069 584
- GB-A- 2 106 380
- US-A- 3 512 832
- US-A- 3 542 429

## Description

La présente invention concerne un système de verrouillage d'un dispositif réglable en translation, tel qu'un appui-tête pour un siège de véhicule automobile, ou autre dispositif réglable en position par translation, et devant être maintenu fermement dans une position préréglée quelconque lors de circonstances particulières, par exemple lorsque le dispositif est soumis à un choc, tout en conservant une grande facilité de réglage en dehors de ces circonstances.

Dans le cas particulier des appuis-tête, les systèmes connus pour leur réglage en hauteur comportent deux broches liées à l'appui-tête et pouvant coulisser dans des alésages respectifs d'une pièce de support, ou gaine, fixée sur le dossier du siège. Le maintien de l'appui-tête dans une position déterminée, choisie par l'utilisateur, est classiquement réalisé par un système d'indexage qui permet de garder l'appui-tête dans la position réglée et de changer cette position par une simple action volontaire sur l'appui-tête, vers le haut ou vers le bas.

Ce système d'indexage est constitué par une série de crans ou d'encoches réalisés sur les broches, dans lesquels s'engagent des moyens élastiques de blocage en position, adaptés sur la gaine. Les crans, dont la section est habituellement de forme triangulaire, sont en général naturellement déverrouillant, c'est-à-dire que la seule action verticale sur l'appui-tête suffit pour repousser les moyens élastiques de blocage et faire coulisser la broche jusqu'à une autre position où les dits moyens de blocage s'engagent dans un autre cran.

Dans certains cas, en particulier lors d'un choc arrière sur le véhicule muni de ces appuis-tête, l'effort exercé par la tête de l'usager sur l'appui-tête peut atteindre une centaine de kilogrammes (1000 N) et comporter une composante verticale d'environ 25 kg (250 N). Un tel effort est suffisant pour déverrouiller le système d'indexation et provoquer le déplacement vers le bas de l'appui-tête, ce qui est dangereux pour l'utilisateur dont la tête n'est plus alors correctement maintenue et peut pivoter vers l'arrière avec des risques de lésions des vertèbres cervicales.

Pour éviter ce problème, il a déjà été proposé, notamment dans US-A-3 563 602, document qui divulgue les caractéristiques du préambule de la revendication 1, de réaliser les crans des broches avec une section dissymétrique, de manière que le verrouillage soit positif vers le bas, c'est-à-dire empêche un coulissement de la broche vers le bas même en cas d'effort important, tout en conservant la fonction d'auto-déverrouillage lors d'un coulissement vers le haut. Pour descendre l'appui-tête, il faut alors le déverrouiller en agissant sur les moyens élastiques de blocage, par un poussoir adapté et les maintenir dans la position déverrouillée pendant que l'on abaisse l'appui-tête. Cette opération est alors peu pratique car elle nécessite l'utilisation des deux mains : l'une pour maintenir le poussoir, et l'autre pour faire coulisser l'appui-tête, et elle est pratiquement impossible, ou très dangereuse, pour le conducteur d'un véhicule en circulation.

On connaît aussi, par le document GB-A-2 069 584, un système de verrouillage d'un appui-tête dans lequel la broche coulissante comporte un crochet pivotant pouvant s'engager, en cas de choc, sous l'extrémité inférieure de la gaine pour empêcher que les broches sortent de leurs gaines. En position d'utilisation normale, le crochet est maintenu dans une position dégagée par une bille. Cette bille peut se déplacer sous l'effet de forces d'inertie créées lors d'un choc et autoriser ainsi le pivotement du crochet. Ce système permet seulement d'empêcher l'extraction de l'appui-tête vers le haut et ne permet pas d'assurer un verrouillage de l'appui-tête dans n'importe quelle position de réglage.

La présente invention vise à résoudre les problèmes évoqués ci-dessus, et a particulièrement pour but de permettre le réglage d'un dispositif tel qu'un appui-tête, vers le haut et vers le bas, à l'aide d'une seule main agissant sur l'appui-tête, tout en assurant un verrouillage sûr dans la position réglée dans le cas où une force verticale importante vers le bas serait exercée sur l'appui-tête, suite à un choc, en particulier à un choc arrière, sur le véhicule.

Avec ces objectifs en vue, l'invention a pour objet un système de verrouillage d'un dispositif réglable en translation tel qu'un appui-tête comportant une glissière et un coulisseau mobiles l'un par rapport à l'autre selon une direction de déplacement, le coulisseau (respectivement la glissière) comportant une série de crans espacés selon la direction de déplacement, et la glissière (respectivement le coulisseau) comportant des moyens de verrouillage comprenant :
- un organe de verrouillage apte à coopérer avec les dits crans et mobile entre une position déverrouillée dans laquelle l'organe de verrouillage est dégagé des dits crans, et une position stable verrouillée dans laquelle l'organe de verrouillage coopère avec les crans pour empêcher un déplacement relatif du coulisseau et de la glissière dans un premier sens de déplacement, et
- des moyens de maintien élastiques agencés pour maintenir le dit organe de verrouillage dans la position verrouillée, caractérisé en ce que :
- les dits moyens de verrouillage sont bistables, la position déverrouillée de l'organe de verrouillage étant également stable,
- les dits moyens de maintien élastique sont agencés pour maintenir le dit organe de verrouillage également dans la position déverrouillée,
- les dits moyens de verrouillage étant déterminés de manière que l'organe de verrouillage puisse se déplacer par inertie, de la position déverrouillée à la position verrouillée, sous l'effet d'un choc subi par le dispositif.

Grâce à l'invention, le dispositif présente, lors de son utilisation courante, une grande facilité de réglage, les moyens de verrouillage étant maintenus dans la position déverrouillée et n'ayant donc aucun effet sur le réglage, qui peut être effectué comme si les moyens de verrouillage étaient absents. Par contre, en cas d'un choc, en particulier dans une direction transversale à la direction de déplacement relatif du coulisseau et de la glissière, l'organe de verrouillage se déplace automatiquement par inertie dans sa position verrouillée et bloque le coulisseau sur la glissière, et reste dans cette position par la suite, jusqu'à ce qu'une action positive soit exercée sur l'organe de verrouillage pour le ramener dans sa position déverrouillée.

Préférentiellement, l'organe de verrouillage et les crans sont conformés de manière qu'un déplacement relatif du coulisseau par rapport à la glissière dans le sens opposé au dit premier sens de déplacement, provoque le passage de l'organe de verrouillage de la position verrouillée à la position déverrouillée.

Selon une disposition particulière, les crans ont, du côté destiné à coopérer avec l'organe de verrouillage pour empêcher le dit déplacement relatif dans le premier sens, un flanc sensiblement orthogonal à la direction de déplacement, et de l'autre côté, un flanc incliné par rapport à cette direction, de manière à repousser l'organe de verrouillage vers sa position déverrouillée, au-delà de sa position d'équilibre instable située entre ses deux positions stables, lorsque le coulisseau est déplacé par rapport à la glissière dans le sens opposé au dit premier sens de déplacement. C'est alors le déplacement relatif du coulisseau par rapport à la glissière, dans le sens opposé à celui où s'est réalisé le verrouillage, qui constitue l'action positive de déverrouillage.

Il suffit alors d'effectuer ce déplacement qui fait repasser l'organe de verrouillage dans sa position déverrouillée, pour redonner au dispositif toute sa facilité de réglage, dans les deux sens de déplacement.

D'autres caractéristiques et avantages de l'invention apparaîtront dans la description qui va être faite à tire d'exemple d'un système de verrouillage, conforme à l'invention, d'un appui-tête d'un siège de véhicule automobile. On se reportera aux dessins annexés dans lesquels :
- la figure 1 est une vue générale d'un appui-tête et de sa fixation sur le dossier du siège,
- la figure 2 est une vue de détail du système de verrouillage, en position verrouillée,
- la figure 3 est une vue similaire, en position déverrouillée,
- la figure 4 est une vue en coupe selon la ligne IV - IV de la figure 1,
- la figure 5 est une vue en coupe selon la ligne V - V de la figure 1,
- la figure 6 est une vue en coupe selon la ligne VI - VI de la figure 1.

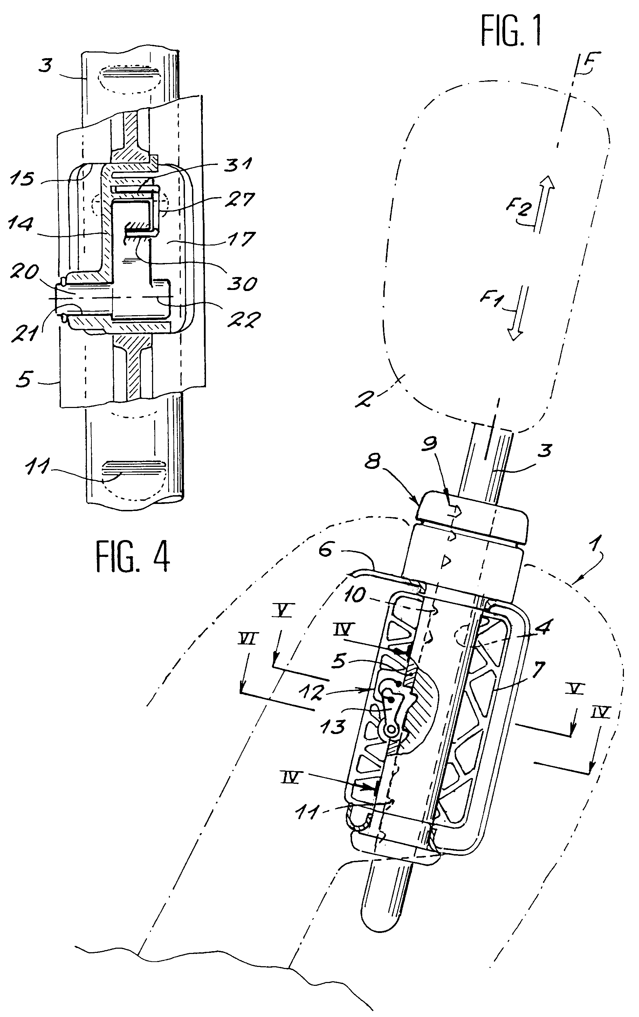

Sur le dessin de la figure 1, on a représenté la partie supérieure d'un dossier 1 de siège équipé d'un appui-tête 2.

L'appui-tête 2 est monté coulissant, dans une direction F sensiblement verticale, sur le dossier 1 par l'intermédiaire de deux broches 3 formant coulisseau, chacune étant insérée dans un alésage 4 d'une gaine 5, constituant une glissière pour la broche 3 et fixée sur l'armature 6 du dossier 1.

La gaine 5, généralement en matière plastique, est pourvue de raidisseurs 7 et comporte à sa partie supérieure un système d'indexage 8 de type classique, permettant de maintenir l'appui-tête dans une position réglable choisie par l'utilisateur. Ce système d'indexage comporte, de manière connue, des moyens élastiques de blocage 9 qui s'engagent dans des encoches 10 transversales réalisées sur la broche 3. Chaque encoche définit une position de réglage dans laquelle l'appui-tête peut être placé et maintenu. La forme de ces encoches, de section généralement triangulaire, est telle qu'un effort relativement faible exercé sur l'appui-tête vers le haut ou vers le bas suffit pour repousser les moyens de blocage et déplacer l'appui-tête vers une autre position de réglage, au choix de l'utilisateur.

Conformément à l'invention, la broche 3 comporte également une série de crans 11, réalisés sur la dite broche, en-dessous de la série d'encoches. Le pas des crans 11 est égal au pas des encoches 10. Les crans 11 constituent, avec des moyens de verrouillage bistables comportant un organe de verrouillage et un ressort, qui vont être décrits par la suite, un système de verrouillage de l'appui-tête destiné à éviter que ce dernier ne se déplace vers le bas sous l'effet d'un effort vertical, supérieur à celui nécessaire au réglage habituel de l'appui-tête, généré par la tête de l'usager, en cas d'un choc, notamment d'un choc arrière, sur le véhicule.

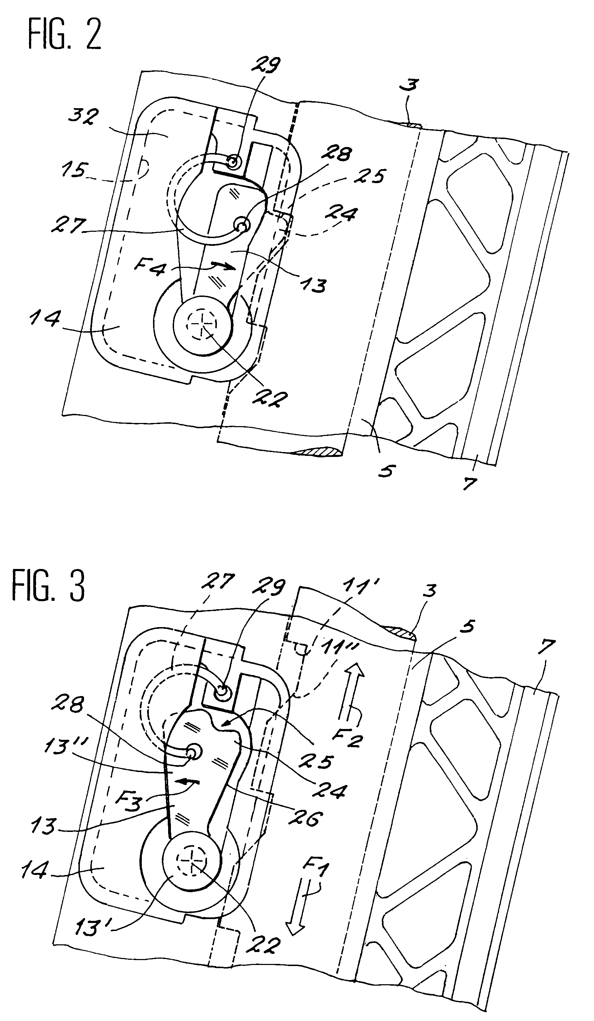

A cet effet, les crans 11 présentent, vers le haut, un flan 11' sensiblement orthogonal à la direction de déplacement F (figures 2 et 3). Par ailleurs, le flan inférieur 11'' des crans est incliné par rapport à cette direction, pour constituer une rampe susceptible, comme on le comprendra mieux par la suite, de repousser l'organe de verrouillage vers sa position déverrouillée.

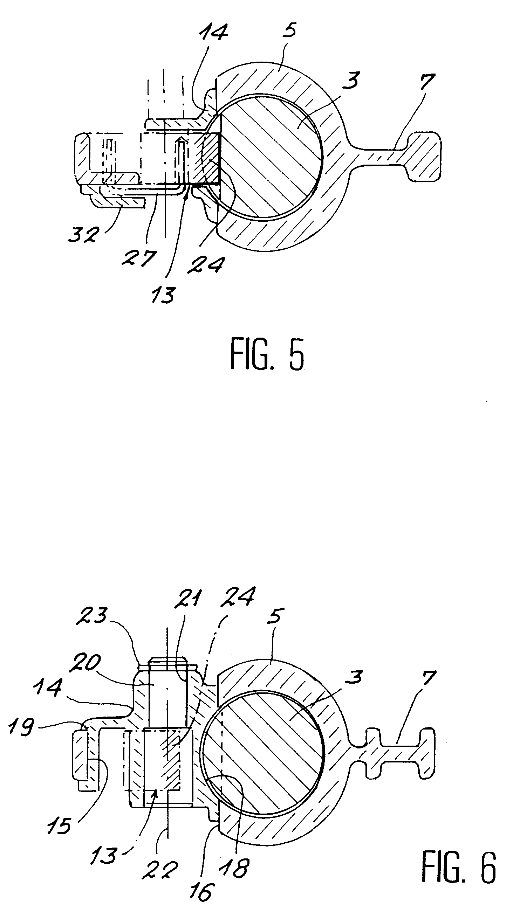

Les moyens de verrouillage bistables 12 comportent un organe de verrouillage constitué d'une pièce pivotante 13 appelée came. Comme on peut le voir sur les figures 2 à 6, la came 13 est montée pivotante dans un boîtier 14 inséré dans un logement 15 ménagé à cet effet dans la gaine 5 formant glissière. Un côté du logement 15 est formé par un méplat 16 réalisé sur la gaine 5, qui crée dans celle-ci une fenêtre 17 s'ouvrant dans l'alésage 4, à travers laquelle la came 13 peut s'engager dans les crans 11. Sur sa face en contact avec le méplat 16, le boîtier 14 comporte un évidement 18 dont la surface reconstitue, en haut et en bas du boîtier, la partie d'alésage supprimée par la réalisation du méplat 16. Ainsi, une fois la broche 3 mise en place, le boîtier 14 ne peut plus sortir de son logement, dans lequel il est de plus maintenu par un clipsage 19.

La came 13 comporte, vers son extrémité 13' située vers le bas, un arbre 20 inséré dans un alésage 21 du boîtier, dans lequel il tourillonne librement, autour d'un axe de pivotement 22 orthogonal à la direction F de déplacement de la broche. Un moyen d'arrêt classique, tel qu'un circlips 23 monté sur l'arbre 20, empêche la came de se déplacer latéralement.

Vers son extrémité supérieure 13'', la came 13 comporte une dent 24 de profil adapté pour coopérer avec celui des crans 11, c'est-à-dire présentant une face supérieure 25 sensiblement orthogonale à la direction de déplacement F, de manière à assurer, en position de verrouillage (figure 2), un blocage certain de la broche 3, le flan supérieur 11' des dits crans buttant contre la face supérieure 25 de la dent 24.

La face inférieure 26 de la dent 24 a une inclinaison correspondante à celle du flanc inférieur 11'' des crans 11, de sorte qu'un déplacement de la broche 3 vers le haut (flèche F2) repousse la came 13 hors du cran 11, à l'encontre de l'effort exercé sur celle-ci par un moyen de maintien élastique tel qu'un ressort 27 en forme de Ω, encore appelé ressort "cor de chasse".

Le ressort a une extrémité 28 liée à la came 13 dans sa partie supérieure 13'', et son autre extrémité 29 est liée au boîtier 14.

La position respective des extrémités 28, 29 du ressort 27 et de l'axe de pivotement 22 de la came 13 est telle que dans la position de verrouillage, représentée à la figure 2, l'extrémité 28 du ressort, liée à la came, se situe, par rapport à la droite passant par l'extrémité 29 du ressort et par l'axe 22, du côté de la broche 3, et dans la position déverrouillée, représentée à la figure 3, l'extrémité 28 du ressort se situe de l'autre côté de cette droite. Dans l'exemple représenté où les deux extrémités du ressort sont situées du même côté par rapport à l'axe 12, le ressort 27 agit en compression, et tend à repousser la came 13 soit en position stable de verrouillage, soit en position stable de déverrouillage, de part et d'autre de la position d'équilibre instable où les extrémités du ressort et l'axe 22 sont alignés, et où les extrémités 28 et 29 du ressort sont le plus rapprochées l'une de l'autre. Le ressort en forme de Ω peut d'ailleurs être remplacé par un autre type de ressort de compression. Un ressort de tension pourrait également être utilisé pour remplir la même fonction, en ayant alors ses extrémités situées de part et d'autre de l'axe 22. D'autres moyens de maintien élastiques pourraient encore être utilisés en coopération avec une configuration adaptée de la came 13, selon des dispositions connues de l'homme du métier, pour réaliser un système came-ressort bistable.

Quel que soit le système utilisé, la disposition relative de la came et du ressort doit être telle que la position verrouillée constitue une position stable de même que la position déverrouillée. De plus, les formes et dimensions de la came 13 et de la dent 24 sont telles que la came est repoussée au-delà de sa position d'équilibre instable lorsque le pivotement de la came 13 dans le sens du déverrouillage (flèche F3, figure 3) est provoqué par l'action du flanc 11'' des crans 11 sur la dent 24, lors d'un déplacement vers le haut (flèche F2) de la broche 3. Ainsi, le seul déplacement dans ce sens de la broche 3 suffit pour replacer la came 13 dans sa position stable de déverrouillage, où elle est maintenue jusqu'à ce qu'un choc provoque sur la came un effort de rotation tendant à la faire pivoter dans le sens (flèche F4) contraire à la flèche F3, et suffisant pour vaincre l'effort de déformation auquel est soumis le ressort 27 lorsqu'il se trouve dans sa position d'équilibre instable. A cet effet, la masse de la came, la raideur du ressort, leurs dimensions et positions relatives sont déterminées en fonction de l'énergie du choc, donc de l'accélération subie par le dispositif, sous laquelle la came doit basculer dans sa position de verrouillage pour empêcher la descente de l'appui-tête.

Par contre, tant que la came reste dans sa position stable déverrouillée, l'appui-tête peut être réglé tant vers le haut que vers le bas, en le déplaçant avec une seule main, et en bénéficiant du système d'indexage classique 8.

On notera que le pas des crans 11 est égal à celui des encoches 10, et que leur position relative est telle qu'un cran 11 se trouve face à la dent 24 de la came lorsque l'appui-tête est dans une quelconque position indexée, de sorte que quelque soit la position de réglage, la came puisse passer en position de verrouillage.

Selon une disposition préférentielle, le ressort 27 en forme de Ω comporte à chaque extrémité 28, 29 une patte de fixation 30, 31, orientée perpendiculairement au plan général du ressort, chaque patte étant insérée dans un trou correspondant, respectivement, de la came et du boîtier, et une plaque de maintien 32 est disposée parallèlement au dit plan du ressort, de manière à recouvrir au moins partiellement le ressort, pour empêcher les dites pattes de sortir de leurs trous.

Cette disposition facilite grandement la mise en place du ressort lors du montage, et la plaque 32, qui est préférentiellement une partie venue de moulage avec le boîtier 14, garantit le maintien en place du ressort.

L'invention n'est pas limitée au dispositif décrit ci-dessus à titre d'exemple. En particulier, le boîtier 14 pourrait être réalisé d'une seule pièce avec la gaine 5. Par ailleurs, le système de verrouillage bistable pourrait, par exemple, comporter, à la place de la came pivotante 13, un verrou mobile en translation perpendiculairement à la direction de déplacement F, guidé dans la gaine 5.

Dans d'autres applications, les crans pourraient aussi être réalisés sur la glissière et le système ressort-organe de verrouillage bistable monté sur le coulisseau.

## Revendications

1. Système de verrouillage d'un dispositif réglable en translation tel qu'un appui-tête (2) comportant une glissière (5) et un coulisseau (3) mobiles l'un par rapport à l'autre selon une direction de déplacement (F), le coulisseau (3) - respectivement la glissière - comportant une série de crans (11) espacés selon la direction de déplacement, et la glissière (5) - respectivement le coulisseau - comportant des moyens de verrouillage (12) comprenant :
- un organe de verrouillage (13) apte à coopérer avec les dits crans (11) et mobile entre une position déverrouillée dans laquelle l'organe de verrouillage (13) est dégagé des dits crans (11), et une position stable verrouillée dans laquelle l'organe de verrouillage coopère avec les crans pour empêcher un déplacement relatif du coulisseau et de la glissière dans un premier sens (F1) de déplacement, et
- des moyens de maintien élastiques agencés pour maintenir le dit organe de verrouillage (13) dans la position verrouillée,
caractérisé en ce que :
- les dits moyens de verrouillage (12) sont bistables, la position déverrouillée de l'organe de verrouillage (13) étant également stable,
- les dits moyens de maintien élastique sont agencés pour maintenir le dit organe de verrouillage également dans la position déverrouillée,
- les dits moyens de verrouillage étant déterminés de manière que l'organe de verrouillage puisse se déplacer par inertie, de la position déverrouillée à la position verrouillée, sous l'effet d'un choc subi par le dispositif.

2. Système de verrouillage selon la revendication 1, caractérisé en ce que l'organe de verrouillage (13) et les crans (11) sont conformés de manière qu'un déplacement relatif du coulisseau par rapport à la glissière dans le sens opposé au dit premier sens (F2) de déplacement, provoque le passage de l'organe de verrouillage de la position verrouillée à la position déverrouillée.

3. Système de verrouillage selon la revendication 2, caractérisé en ce que les crans (11) ont, du côté destiné à coopérer avec l'organe de verrouillage (13) pour empêcher le dit déplacement relatif dans le premier sens (F1), un flanc (11') sensiblement orthogonal à la direction de déplacement (F), et de l'autre côté, un flanc (11'') incliné par rapport à cette direction, de manière à repousser l'organe de verrouillage (13) vers sa position déverrouillée, au-delà de sa position d'équilibre instable située entre ses deux positions stables, lorsque le coulisseau est déplacé par rapport à la glissière dans le sens opposé (F2) au dit premier sens de déplacement.

4. Système de verrouillage selon l'une des revendications 1 à 3, caractérisée en ce que l'organe de verrouillage est une came (13) pivotante articulée sur la glissière (5) (respectivement le coulisseau).

5. Système de verrouillage selon l'une des revendications 1 à 4, caractérisé en ce que les moyens de maintien élastiques comprennent un ressort (27) en forme de oméga, dont une extrémité est liée à l'organe de verrouillage (13), et l'autre extrémité est liée à la glissière (5) (respectivement au coulisseau).

6. Système de verrouillage selon l'une des revendication 1 à 5, caractérisé en ce que l'organe de verrouillage (13) et les moyens de maintien élastiques sont montés dans un boîtier (14) inséré dans un logement (15) ménagé à cet effet dans la glissière.

7. Système de verrouillage selon la revendication 6, caractérisé en ce que le ressort (27) comporte à chaque extrémité (28, 29) une patte de fixation (30, 31), orientée perpendiculairement au plan général du ressort, chaque patte étant insérée dans un trou correspondant, respectivement, du verrou et du boîtier, et une plaque de maintien (32) est disposée parallèlement au dit plan du ressort, de manière à recouvrir au moins partiellement le ressort, pour empêcher les dites pattes de sortir de leurs trous.

8. Système de verrouillage selon l'une quelconque des revendications 1 à 7, caractérisé en ce que le pas des crans de verrouillage (11) est égal au pas d'une série de crans (10) d'indexation réalisés sur le coulisseau (3) et coopérant avec des moyens élastiques (9) pour maintenir le coulisseau par rapport à la glissière dans une pluralité de positions de réglage prédéterminées.

9. Système de verrouillage selon l'une des revendications 1 à 8, caractérisée en ce que le coulisseau est constitué d'une broche (3) sur laquelle sont réalisés les dits crans (11) de verrouillage, et la glissière est constituée d'une gaine (5) comportant un alésage (4) cylindrique dans lequel peut coulisser la dite broche.

## Claims

1. System for locking a translationally adjustable device such as a headrest (2) having a runner (5) and a slide (3) movable with respect to each other in a direction of movement (F), the slide (3) - or respectively the runner - having a series of notches (11) spaced out in the direction of movement, and the runner (5) - or respectively the slide - having locking means (12) comprising:
- a locking member (13) able to cooperate with the said notches (11) and movable between an unlocked position in which the locking member (13) is released from the said notches (11) and a stable locked position in which the locking member cooperates with the notches to prevent a relative movement of the slide and runner in a first direction (F1) of movement, and
- elastic holding means arranged so as to hold the said locking member (13) in the locked position,
characterised in that:
- the said locking means (12) are bistable, the unlocked position of the locking member 13 also being stable,
- the said elastic holding means are arranged so as to hold the said locking member also in the unlocked position,
- the said locking means being determined so that the locking member is able to be moved by inertia, from the unlocked position to the locked position, under the effect of an impact received by the device.

2. Locking system according to Claim 1, characterised in that the locking member (13) and the notches (11) are formed in such a way that a relative movement of the slide with respect to the runner in the opposite direction to the said first direction (F2) of movement causes the locking device to pass from the locked position to the unlocked position.

3. Locking system according to Claim 2, characterised in that the notches (11) have, on the side designed to cooperate with the locking member (13) to prevent the said relative movement in the first direction (F1), a flank (11') substantially orthogonal to the direction of movement (F) and, on the other side, a flank (11'') inclined with respect to this direction, so as to push the locking member (13) back to its unlocked position, beyond its unstable equilibrium position situated between its two stable positions, when the slide is moved with respect to the runner in the opposite direction (F2) to the said first direction of movement.

4. Locking system according to one of Claims 1 to 3, characterised in that the locking member is a pivoting cam (13) pivoting on the runner (5) (or respectively the slide).

5. Locking system according to one of Claims 1 to 4, characterised in that the elastic holding means comprise a spring 27 in the shape of an omega, one end of which is connected to the locking member (13) and the other end of which is connected to the runner (5) (or respectively to the slide).

6. Locking system according to one of Claims 1 to 5, characterised in that the locking member (13) and the elastic holding means are mounted in a casing (14) inserted in a housing (15) formed for this purpose in the runner.

7. Locking system according to Claim 6, characterised in that the spring (27) has at each end (28, 29) a fixing lug (30, 31) oriented perpendicularly to the overall plane of the spring, each lug being inserted into a corresponding hole, respectively, in the lock and in the casing, and a holding plate (32) is disposed parallel to the said plane of the spring, so as to cover the spring at least partially, in order to prevent the said lugs from leaving their holes.

8. Locking system according to any one of Claims 1 to 7, characterised in that the pitch of the locking notches (11) is equal to the pitch of a series of indexing notches (10) produced on the slide (3) and cooperating with elastic means (9) to hold the slide with respect to the runner in a plurality of predetermined adjustment positions.

9. Locking system according to one of Claims 1 to 8, characterised in that the slide consists of a pin (3) on which the said locking notches (11) are produced, and the runner consists of a sheath (5) having a cylindrical bore (4) in which the said pin can slide.

## Patentansprüche

1. Verriegelungsvorrichtung für einen verschiebbaren Gegenstand wie etwa eine Kopfstütze (2), mit einer Schiene (5) und einem Gleiter (3), die gegeneinander entlang einer Verschiebungsachse (F) bewegbar sind, wobei der Gleiter (3) bzw. die Schiene eine Reihe von entlang der Verschiebungsachse beabstandeten Rasten (11) aufweist und die Schiene (5) bzw. der Gleiter (3) Verriegelungsmittel (12) aufweist, welche umfassen:
- ein Verriegelungselement (13), das eingerichtet ist, um mit den Rasten (11) zusammenzuwirken und das bewegbar ist zwischen einer entriegelten Position, in der das Verriegelungselement (13) von den Rasten (11) frei ist, und einer stabilen verriegelten Position, in der das Verriegelungselement mit den Rasten zusammenwirkt, um eine Verschiebung des Gleiters und der Schiene gegeneinander in einer ersten Verschiebungsrichtung (F1) zu verhindern, und
- elastische Haltemittel, die eingerichtet sind, um das Verriegelungselement (13) in der verriegelten Position zu halten,
dadurch gekennzeichnet, daß
- die Verriegelungsmittel (12) bistabil sind, so daß die entriegelte Position des Verriegelungselements (13) ebenfalls stabil ist,
- die elastischen Haltemittel eingerichtet sind, um das Verriegelungselement auch in entriegelter Position zu halten,
- die Verriegelungsmittel so ausgelegt sind, daß das Verriegelungselement unter Einwirkung eines Stoßes an den Gegenstand durch Trägheitswirkung von der entriegelten Position in die verriegelte Position übergehen kann.

2. Verriegelungsvorrichtung nach Anspruch 1,
dadurch gekennzeichnet, daß
das Verriegelungselement (13) und die Rasten (11) so ausgebildet sind, daß eine Verschiebung des Gleiters gegen die Schiene in einer der ersten Richtung entgegengesetzten Richtung (F2) den Übergang des Verriegelungselements aus der verriegelten Position in die entriegelte Position bewirkt.

3. Verriegelungsvorrichtung nach Anspruch 2,
dadurch gekennzeichnet, daß
die Rasten (11) an derjenigen Seite, die vorgesehen ist, um mit dem Verriegelungselement (13) zusammenzuwirken, eine zur Verschiebungsachse (F) im wesentlichen orthogonale Flanke (11') besitzen, um die Verschiebung gegeneinander in der ersten Richtung (F1) zu verhindern, und auf der anderen Seite eine Flanke (11'') besitzen, die gegen diese Achse geneigt ist, um das Verriegelungselement über seine zwischen den zwei stabilen Positionen liegende instabile Gleichgewichtsposition hinaus in die entriegelte Position zu drücken, wenn der Gleiter gegen die Schiene in der der ersten Verschiebungsrichtung entgegengesetzten Richtung (F2) bewegt wird.

4. Verriegelungsvorrichtung nach einem der Ansprüche 1 bis 3,
dadurch gekennzeichnet, daß
das Verriegelungselement ein schwenkbar an die Schiene (5) (bzw. den Gleiter) angelenkter Nocken (13) ist.

5. Verriegelungsvorrichtung nach einem der Ansprüche 1 bis 4,
dadurch gekennzeichnet, daß
die elastischen Haltemittel eine omegaförmige Feder (27) umfassen, von der ein Ende mit dem Verriegelungselement (13) und das andere Ende mit der Schiene (5) (bzw. dem Gleiter) verbunden ist.

6. Verriegelungsvorrichtung nach einem der Ansprüche 1 bis 5,
dadurch gekennzeichnet, daß
das Verriegelungselement (13) und die elastischen Haltemittel in einem Gehäuse (14) montiert sind, das in eine zu diesem Zweck in der Schiene gebildete Aussparung (15) eingesetzt ist.

7. Verriegelungsvorrichtung nach Anspruch 6,
dadurch gekennzeichnet, daß
die Feder (27) an jedem Ende (28, 29) einen senkrecht zur Hauptebene der Feder orientierten Befestigungsfuß (30, 31) aufweist, daß jeder Fuß in ein entsprechendes Loch des Riegels bzw. des Gehäuses eingesetzt ist und eine Halteplatte (32) parallel zur Ebene der Feder so angeordnet ist, daß die Feder wenigstens teilweise verdeckt ist, um die Füße daran zu hindern, ihre Löcher zu verlassen.

8. Verriegelungsvorrichtung nach einem der Ansprüche 1 bis 7,
dadurch gekennzeichnet, daß
der Abstand der Verriegelungsrasten (11) gleich dem Abstand einer Reihe von Indexierungsrasten (10) ist, die am Gleiter (3) gebildet sind und mit den elastischen Mitteln (9) zusammenwirken, um den Gleiter in Bezug auf die Schiene in einer Mehrzahl von vorgegebenen Einstellpositionen zu halten.

9. Verriegelungsvorrichtung nach einem der Ansprüche 1 bis 8,
dadurch gekennzeichnet, daß
der Gleiter durch einen Zapfen (3) gebildet ist, an dem die Verriegelungsrasten (11) ausgebildet sind, und die Schiene durch eine Hülse (5) gebildet ist, die eine zylindrische Bohrung (4) aufweist, in der der Zapfen gleiten kann.
